(19) Europäisches Patentamt
European Patent Office
Office européen des brevets

(11) **EP 1 853 897 B1**

(12) **EUROPEAN PATENT SPECIFICATION**

(45) Date of publication and mention
of the grant of the patent:
**19.09.2012 Bulletin 2012/38**

(51) Int Cl.:
*G01N 21/61* (2006.01)          *G01N 21/35* (2006.01)
*G01N 21/03* (2006.01)

(21) Application number: **05856513.6**

(22) Date of filing: **11.10.2005**

(86) International application number:
**PCT/KR2005/003368**

(87) International publication number:
**WO 2006/080744 (03.08.2006 Gazette 2006/31)**

(54) **GAS CELL USING TWO PARABOLIC CONCAVE MIRRORS AND METHOD OF PRODUCING GAS SENSOR USING THE SAME**

GASZELLE MIT ZWEI KONKAVEN PARABOLSPIEGELN UND VERFAHREN ZUR HERSTELLUNG EINES GASSENSORS DAMIT

CELLULE A GAZ COMPRENANT DEUX MIROIRS CONCAVES PARABOLIQUES ET PROCEDE DE PRODUCTION D'UN DETECTEUR DE GAZ AU MOYEN DE CELLE-CI

(84) Designated Contracting States:
**AT BE BG CH CY CZ DE DK EE ES FI FR GB GR HU IE IS IT LI LT LU LV MC NL PL PT RO SE SI SK TR**

(30) Priority: **18.10.2004 KR 20040083140**

(43) Date of publication of application:
**14.11.2007 Bulletin 2007/46**

(73) Proprietor: **Elt Inc.**
**Asan-si, Chungcheongnam-do 336-885 (KR)**

(72) Inventors:
• **YI, Seung-Hwan**
**Songpa-gu Seoul 138-202 (KR)**

• **PARK, Jeong-Ik**
**Gangdong-gu Seoul 134-845 (KR)**

(74) Representative: **Hernández Hernández, Carlos**
**C/Velazquez 109, 2˚D**
**28006 Madrid (ES)**

(56) References cited:
**WO-A1-99/41592          WO-A1-2005/057188**
**DE-A1- 10 216 047      DE-A1- 19 848 120**
**DE-B1- 2 937 352        DE-U1- 9 017 745**
**US-A- 5 116 120          US-A- 5 170 064**
**US-A- 5 973 326          US-B1- 6 194 735**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

## FIELD OF THE INVENTION

The present invention relates to a method of producing a gas cell, which is the most important element of a gas density measurement device using an NDIR (non-dispersive infrared) technology. More particularly, the present invention relates to a method of producing a gas cell having an optical cavity, which is suitable for various applications and has a simple geometric structure facilitating the analysis for the optical path, and a method of producing a gas sensor by using the gas cell.

## STATE OF THE ART

As the public interest in atmospheric environment has increased, technologies for preventing unexpected accidents by precisely detecting toxic gas contained in the atmosphere or generated from working fields have become spotlighted. In this regard, there is a necessity to provide portable gas sensors or small-sized gas sensors adaptable for narrow rooms as well as large-sized gas sensors. To this end, various attempts have been made in order to fabricate a gas cell in a small size with a lightweight. That is, miniaturization and lightness of the gas cell has become main factors to be considered when designing the gas cell, which is the most important element for detecting gas. In addition, it is also necessary to maximize the efficiency of the gas cell within a limited size. Since an NDIR gas cell measures the light absorptivity in gas with respect to light passing through the gas, there has been attempts to lengthen the optical path and some positive result has been obtained.

In order to obtain a longer optical path within a limited space, a mirror is used in such a manner that light can be reflected several times in an optical cavity of a gas cell. To this end, optical cavities with various geometric structures have been suggested, but the problem of lengthening the optical path still remains. One of the factors causing the problems is the size of a light source or a light detector. That is, since the size of a light source or a light detector cannot be disregarded in the optical cavity, it is difficult to produce a practically useful optical cavity in a small size. To solve the above problem, mirrors are aligned in the optical cavity in a geometric structure. However, in this case, it is difficult to analyze the optical path due to the complicated geometric structure. That is, since the optical cavity having the complicated geometric structure cannot be easily modified, it is necessary to obtain an optimal optical path based on various simulation tests in order to modify the optical cavity. In addition, if there is a little variation in a factor, which is used for analyzing the optical cavity, due to a defect occurring during the fabrication process of the optical cavity, it is impossible to obtain a desired optical cavity. Thus, the optical cavity must be precisely produced. For this reason, the optical cavity can only be produced at great cost and time expense.

It is known from the state of the art a multiple reflection cell as the one disclosed in DE 9017745 U1 comprising two parallel, mutually facing concave mirrors on the optical axis.

It is also known from the State of the Art a multiple reflection optical cell having an internal sample holding cavity (2), a light entry port (5), and a light exit port (6) is free of moveable mirrors or other moveably linked optical components as the one disclosed at DE 10216047 (A1) wherein the reflecting surfaces of the cell may take the form of opposed parabolic or parallel pairs, cylindrical, circular or spiral arrangements of multiple mirrors. The cell may be made from a block of a semiconductor material, e.g. silicon or gallium arsenide, a dielectric, ceramic, glass, polymer, or metal. Alternatively a dielectric such as silica and/or silicon nitride may be deposited on a cast or molded substrate and the reflecting surfaces configured. Reflection may rely on the intrinsic properties of the cell material or be achieved by coating with aluminum, silver or gold, as appropriate for the wavelength.

Finally it is known from the state of the art a gas sensor as the one disclosed in US 6194735 B1, which is adapted for evaluating the contents of a gas sample enclosed in a cavity or a gas cell, wherein the gas sensor has the form of a block in which the wall or wall-parts of a gas cell or cavity have highly light-reflective properties, designated mirror surfaces; The cavity has an opening for incoming light rays which are reflected in the cavity a predetermined number of times such as to create an optical analysis path before being caused to pass through an opening for outgoing light rays, such reflections being achieved with the aid of three opposing, concave light-reflecting wall-parts.

WO-2005/057188 discloses a gas sensor comprising an optical cavity arrangement.

## DESCRIPTION OF THE INVENTION

### Technical Object

Therefore, the present invention has been made in view of the above-mentioned problems, and it is an object of the present invention to provide a producing method and an analysis process for a gas cell having superior optical measurement characteristics as compared with conventional gas cells, wherein the gas cell is an important element of a gas sensor which measures density of gas using a light absorption characteristic of the gas through an NDIR (non-dispersive infrared) technology.

A method of measuring density of gas using the NDIR technology has been recently spotlighted because it represents superior precision and accuracy at a low measurement cost. According to the above method, on the basis of the light absorption characteristic of gas with respect to light having a predetermined wavelength, when light having the predetermined wavelength is radiated into the gas, the light absorption in the gas is measured, thereby detecting the density of gas. For instance, since $CO_2$ represents superior light absorption characteristics with respect to an infrared ray having a wavelength of $4.3\mu m$, the infrared ray having the wavelength of $4.3\mu m$ is radiated into $CO_2$ in order to measure the density of $CO_2$. That is, the density of $CO_2$ can be calculated by comparing intensity of the infrared ray detected by a light detector when the density of $CO_2$ is "0" with intensity of the residual infrared ray that remains after the infrared ray has been absorbed in $CO_2$.

In this case, if the length of light in the gas (that is, the optical path in the gas) increases, intensity of light detected by the light detector is reduced. As a result, intensity of incident light is significantly different from intensity of output light, so the density of gas can be precisely measured. In short, according to the method of measuring the density of gas using the NDIR technology, it is very important to produce the optical cavity capable of lengthening the optical path within a limited spatial area.

To this end, the present invention provides a producing method and an analysis process for a gas cell having an optical cavity capable of significantly lengthening an optical path thereof using two parabolic concave mirrors, which share a focus and an optical axis. That is, the present invention provides a gas cell including an optical cavity representing superior characteristics as compared with that of conventional gas cells, which makes it possible to fabricate a gas sensor capable of precisely measuring the density of gas by using the gas cell.

As mentioned above, in order to fabricate the gas cell capable of lengthening the optical path within a limited size, the following conditions must be satisfied. In other words, the present invention provides a gas cell satisfying the following conditions and a method of properly analyzing the gas cell.

1) The optical cavity is designed using a lens or a mirror having a desired geometric structure. At this time, the lens or the mirror must have a simple geometric structure. In this case, the system analysis can be easily achieved and the optical cavity can be produced within a short period of time at a low cost.

2) An optical system in the optical cavity must be stabilized. That is, light must be stably converged into the light detector even if the light slightly deviates from a desired optical path due to external impact or defects that may occur during the fabrication process of the gas cell. To this end, it is necessary to stably output light (light detection) even if input parameters (parameters of light source) are changed.

Thus, the present invention provides a method of producing the optical cavity satisfying the above conditions and a method of fabricating a gas cell using the optical cavity having an optical path longer than that of the conventional optical cavity.

## MEANS FOR SOLVING THE TECHNICAL OBJECT

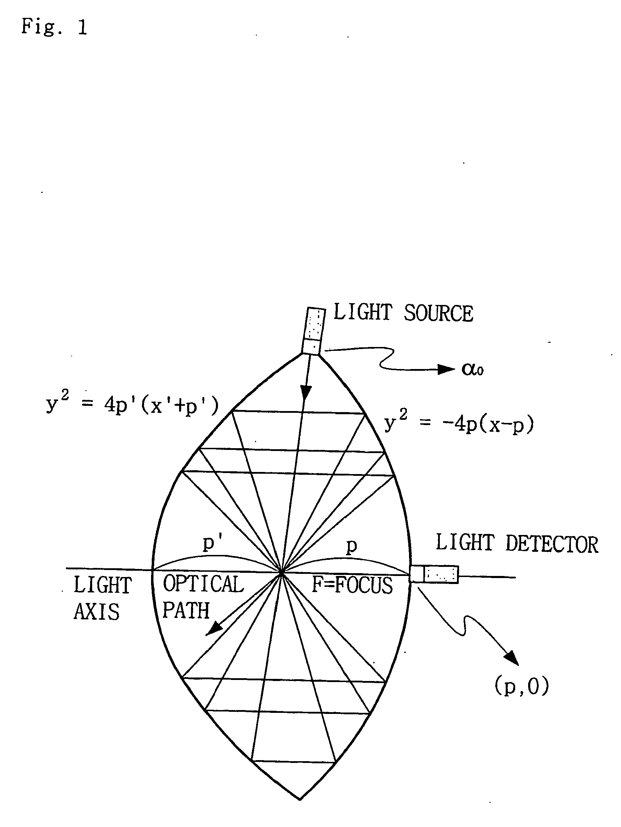

The abovementioned problems are solved with a gas cell according to claim 1. As shown in FIG. 1, two concave mirrors in the form of quadratic parabola are aligned in opposition to each other such that they have a common focus and a common optical axis even though they have different focus lengths. In addition, a light source is located at a cross point of the two parabolic concave mirrors such that the light source faces the focus and a light detector is located on the optical axis. According to the above construction, light radiated from the light source passes through the focus and is reflected several times by means of the concave mirrors. Then, the light converges into the optical axis so that the light can be detected by means of the light detector. Such a converged light can be achieved even if the light source slightly deviates from the focus due to the defects occurring in the light source during the fabrication process thereof. Therefore, the present invention provides a system, which has a simple structure and can be easily analyzed, using the parabolic concave mirrors. Such a system represents stable light detection characteristics. Hereinafter, the structure of the present invention will be described in detail.

In order to realize the above structure, mathematical functions of concave mirrors having characteristics satisfying the following conditions are obtained and an optical convergence system using the concave mirrors is provided.

① The light incident through the focus of the concave mirror must travel in parallel to the optical axis after it is reflected from the mirror surface.

② The light incident in parallel to the optical axis travels by passing through the focus after it is reflected from the mirror surface.

## ADVANTAGEOUS EFFECTS OF THE INVENTION

As mentioned above, since the optical cavity of the gas cell according to the present invention is produced using the concave mirror in the form of a quadratic parabola, it is easy to produce and analyze the optical cavity of the gas cell. The optical cavity according to the present invention must be produced by taking parameters p, p', $L_1$ and $L_2$ into consideration. The present invention also provides several mathematical equations so as to produce and analyze the optical cavity by properly adjusting the above parameters. Thus, the gas cell having desired characteristics can be fabricated by properly modifying the mathematical equations, and it is also possible to fabricate a desired gas sensor using the gas cell.

In addition, according to the optical cavity of the present invention, the light can be stably converged into the light detector even if the light slightly deviates from a desired optical path due to external impact or defects that may occur during the fabrication process of the gas cell. Thus, it is possible to stably output light (light detection) even if input parameters (parameters of light source) are changed. That is, the optical cavity of the gas cell according to the present invention allows the light to be stably converged into the light detector even if the light is slightly dispersed with respect to the desired optical path, thereby reducing the waste of light intensity.

Furthermore, the optical cavity according to the present invention has an optical path longer than that of the conventional optical cavity, so it is possible to precisely fabricate the gas cell.

In most conventional optical cavities, the desired optical path is found through performing a plurality of simulation tests by combining various concave mirrors with convex mirrors and lenses. However, such a conventional scheme not only causes a trial and error process to be repeated, but also requires great labor force. In addition, the conventional scheme incurs time and cost expenses in order to fabricate and test the gas cell, thereby resulting in a cost increase to fabricate the gas cell.

According to the present invention, since the optical cavity has a simple structure and can be mathematically analyzed in an easy manner, it is possible to produce the optical cavity within a short period of time at a low cost. As a result, the optical cavity of the present invention can reduce the cost for manufacturing the gas cell and is suitable for the demand of the consumers.

## BRIEF DESCRIPTION OF THE DRAWINGS

FIG. 1 is a view illustrating an optical cavity using two concave mirrors in the form of quadratic parabolas according to one embodiment of the present invention;

FIG. 2 is a view illustrating a quadratic parabola used for producing an optical cavity according to one embodiment of the present invention;

FIG. 3 is a view illustrating characteristics of an optical path in an optical cavity according to one embodiment of the present invention;

FIG. 4 is a view for explaining the calculation procedure for conditions of an optical path in relation to the size of a light source and a light detector in an optical cavity according to one embodiment of the present invention;

FIG. 5 is a view illustrating the analysis procedure for an optical path of light when the light travels while deviating from a focus in an optical cavity including two parabolas having the same focus length ; and

FIG. 6 is a view illustrating the analysis procedure for an optical path of light when the light travels while deviating from a focus in an optical cavity including two parabolas having different focus lengths according to one embodiment of the present invention.

## BEST MODE FOR CARRYING OUT THE INVENTION

Hereinafter, the structure of the present invention will be described with reference to accompanying drawings.

FIG. 1 is a view illustrating an optical cavity using two concave mirrors in the form of quadratic parabolas according to one embodiment of the present invention.

In the parabolic concave mirrors, light incident toward the focus travels parallel to the optical axis after it has been reflected from mirror surfaces and light incident parallel to the optical axis passes through the focus after it has been reflected from the mirror surfaces. Based on the above reflection characteristics of the parabolic concave mirrors, as shown in FIG. 1, two concave mirrors are aligned in opposition to each other such that the concave mirrors derived from two quadratic functions having focus lengths of p and p' share the focus, thereby forming an optical cavity. At this time, a light source is located at a position $A_0$ while facing the focus and a light detector is located at an optical axis (p, 0) in a -x direction.

Light radiated from the light source toward the common focus is reflected in the parabolic concave mirrors several times according to the characteristics of the parabolic concave mirrors and then converges into the optical axis, so that the light can detected by the light detector.

In this case, the length of the optical path can be adjusted according to the condition of the focus lengths of p and p'. For instance, if a beam size and a diameter of the light detector are set to 4mm when the focus lengths of p and p' are 15mm and 13.5mm, respectively, an optical path length of approximately 1026mm can be obtained through the analysis scheme according to the present invention.

1. Induction Of Function For Concave Mirror

In order to induce the function for the concave mirror having the above characteristics ① and ②, a simple differential equation is utilized.

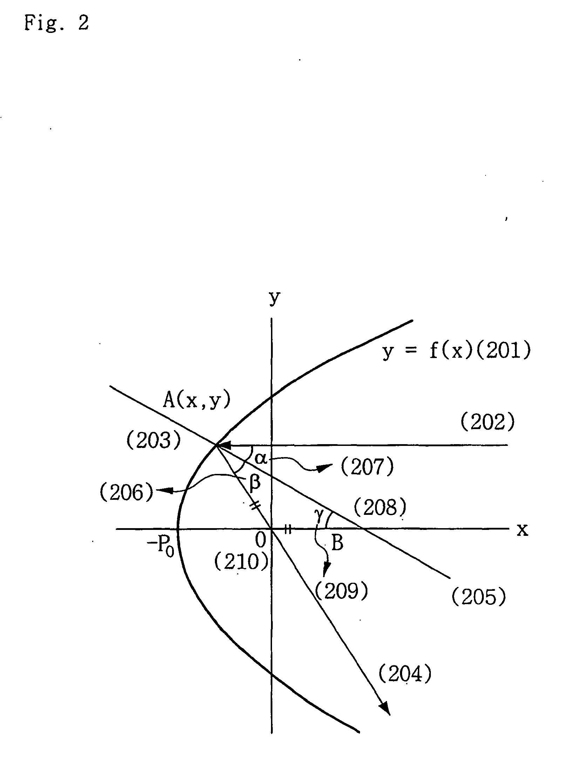

FIG. 2 is a view illustrating a quadratic parabola used for producing the optical cavity according to one embodiment of the present invention, which satisfies the above characteristics ① and ②.

If light 202 incident into a mirror in parallel to an x-axis passes through a zero point 210 while being reflected from a predetermined point A(x,y) 203 of the mirror, which corresponds to a predetermined function (y = f(x)) 201, since an incident angle ($\alpha$) 207 is identical to a reflection angle ($\beta$) 206 about a normal line 205 passing through the point A (x,y) 203, the normal line 205 passes through a point B 208 located on the x-axis. At this time, an equation $\overline{OA} = \overline{OB}$ *is* established based on an equation ($\alpha$) 207 = ($\beta$) 206 = ($\gamma$) 207. Thus, (x,y) satisfies equation (1).

$$\sqrt{x^2 + y^2} = \frac{dy}{dx} y + x \qquad -----(1)$$

If quadratic polar coefficients (r,$\theta$) are applied to equation (1), equation (2) can be obtained.

$$x = r\cos\theta, \qquad y = r\sin\theta$$

$$\frac{dy}{dx} = \frac{r\cos\theta + \frac{dr}{d\theta}\sin\theta}{-r\sin\theta + \frac{dr}{d\theta}\cos\theta}$$

$$r = \frac{r\cos\theta + \frac{dr}{d\theta}\sin\theta}{-r\sin\theta + \frac{dr}{d\theta}\cos\theta} r\sin\theta + r\cos\theta \quad -------(2)$$

In addition, equation (3) can be obtained from equation (2).

$$\frac{dr}{d\theta}(1 - \cos\theta) = -r\sin\theta \qquad -----(3)$$

If cos$\theta$-1=$z$ is applied in order to obtain a solution for differential equation (3), $dz$=-sin$\theta d\theta$ results, so equation (3) can be expressed as equation (4).

$$rdr = -zdz$$

$$r = \frac{C_0}{z} = \frac{C_c}{\cos\theta - 1} \qquad -----(4)$$

In FIG. 2, if x = -$p_0$ ($p_0$>0) when y = 0, $\gamma$ = $p_0$ and $\theta$ = n. Thus, it is possible to obtain $C_0$ = -2$p_0$ from equation (4). Thus, equation (5) can be obtained from equation (4).

$$r(\cos\theta - 1) = -2p_0$$
$$x - \sqrt{x^2 + y^2} = -2p_0 - - - - - (5)$$

A quadratic parabolic curve with respect to y, as expressed in equation (6), can be obtained from equation (5).

$$y^2 = 4p_0(x + p_0) - - - - - (6)$$

The concave mirror fabricated with the quadratic parabolic curve obtained from FIG. 2 and equation (1) has "reflection characteristics" as follows:

- Light incident in parallel to an optical axis (x-axis in FIG. 2) passes through a focus (zero point 210 in FIG. 2) while being reflected from the parabolic concave mirror.
- Light incident while passing through the focus travels in parallel to the optical axis while being reflected from the parabolic concave mirror.

2. Characteristics Of Optical Cavity Including Two Concave Mirrors In The Form Of Quadratic Parabolas

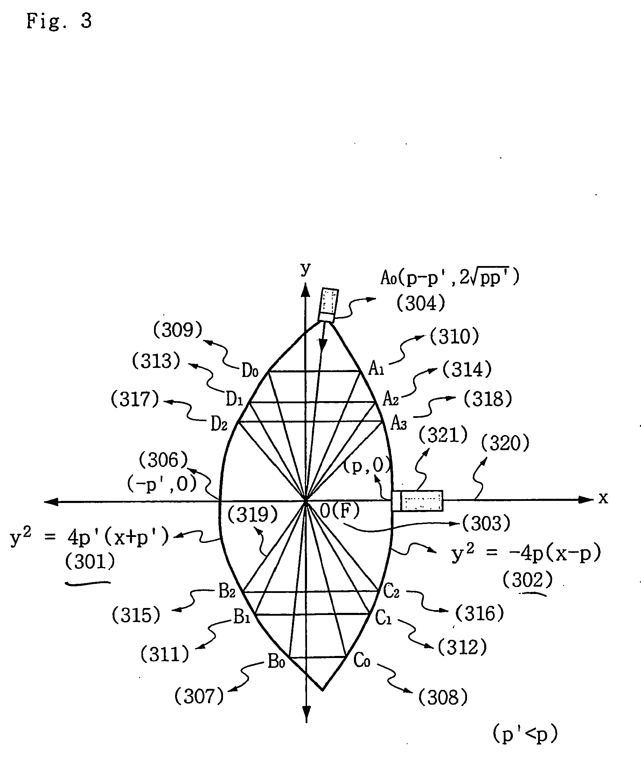

Hereinafter, description will be made in relation to the characteristics of the optical cavity with reference to FIG. 3, in which the optical cavity uses two parabolic concave mirrors aligned in opposition to each other while sharing the focus and the optical axis even though they have different focus lengths.

FIG. 3 is a view illustrating characteristics of the optical path in the optical cavity according to one embodiment of the present invention, in which the optical cavity is realized by combining two concave mirrors, which correspond to quadratic parabolas $y^2 = -4p(x - p)$ (301) and $y^2 = 4p'(x+p')$(302), respectively. Herein, central points of the quadratic parabolas are (p,0) 305 and (-p',0) 306, respectively, (0<p'<p). In addition, the focus F is a zero point 303 and the optical axis is an x-axis 320, which are shared by both quadratic parabolas.

The light source 304 can be located in various positions if the light radiated from the light source 304 can be reflected from the concave mirror 301 by passing through the focus. In order to facilitate explanation of the present invention, it is assumed that the light source 304 is located at a point $A_0$, which is one of two cross points between two concave mirrors 301 and 302 and is positioned in the +y direction. However, this is for illustrative purposes only, and the present invention does not limit the position of the light source 304. The coordinates of the light source 304 are $A_0 = (\alpha_0, \beta_0) = (p - p', 2\sqrt{pp'})$.. The light radiated from the light source is circulated ($A_0$ 304→ $B_0$ 307→ $C_0$ 308→ Do 309) in the closed optical cavity one time and reaches a point $A_1$. Then, the light travels along a route ($A_2$→$A_3$→ $A_4$ ... $A_n$→ ....$A_\infty$). As mentioned above, $A_\infty$ is a point (p, 0) at which the light detector is positioned. Thus, the traveling characteristic of the light in the optical cavity can be detected by obtaining the coordinates of $A_n$. To this end, $A_n$, $B_n$, $C_n$ and $D_n$ are defined as expressed in equation (7).

$$
\begin{aligned}
A_n &= (\alpha_n, \ \beta_n) \\
B_n &= (\alpha'_n, \ \beta'_n) \\
C_n &= (\alpha''_n, \ \beta''_n) \qquad - - - - - - - (7) \\
D_n &= (\alpha'''_n, \ \beta'''_n)
\end{aligned}
$$

Herein, $A_1 = (\alpha_1, \beta_1)$ is presented as $\alpha_0$, $\beta_0$, and $A_n = (\alpha_n, \beta_n)$ is presented as $\alpha_0$, $\beta_0$ through generalization in order to analyze the travel path of the light. To this end, $B_0$, $C_0$ and $D_0$ are presented in the form of $\alpha_0$, $\beta_0$, respectively.

In FIG. 3, $A_0$ and $B_0$ are points, which belong to functions $y^2 = -4p(x - p)$, $y^2 = 4p'(x + p')$ and are located on a straight line extending by passing through the zero point. Thus, equations (8), (9) and (10) can be obtained.

$$\beta_0^2 = -4p(\alpha_0 - p) \quad - - - - - - - (8)$$

$$\beta'^2_0 = 4p'(\alpha'_0 + p') \quad - - - - - - - (9)$$

$$\beta'_0 = \frac{\beta_0}{\alpha_0}\alpha'_0 \quad ------(10)$$

If the simultaneous quadratic equation with two variables $\alpha'_0$, $\beta'_0$ represented in equations (8), (9) and (10) is regulated with respect to $\alpha'_0$, equation (11) is induced. In addition, the solution of $\alpha'_0$ is shown in equation (12).

$$p(\alpha_0 - p)\alpha'^2_0 + p'\alpha_0^2\alpha'_0 + p'^2\alpha_0^2 = 0 \quad -------(11)$$

$$\alpha'_0 = -\frac{p'}{p}\alpha_0 \; or \; \alpha'_0 = \alpha_0\frac{p'}{p-\alpha_0} \quad -------(12)$$

Herein, $\alpha_0$ and $\alpha'_0$ are points symmetrical to each other about the zero point, so they have mutually different signs. Accordingly, $\alpha'_0 = -\frac{p'}{p}\alpha_0$ is the single available solution for equation $(12)^p$. In addition, $\beta'_0$ can be induced from equation (10) (see, equation 13).

$$\beta'_0 = -\frac{p'}{p}\beta_0$$

$$B_0 = (-\frac{p'}{p}\alpha_0, -\frac{p'}{p}\beta_0)--------(13)$$

According to the characteristics of quadratic parabolic function, $\overline{B_0 C_0}$ is a straight line parallel to the x-axis, so $\beta''_0 = \beta'_0$ can be realized. In addition, $C_0$ is a point, which belongs to the function $y^2 = -4p(x-p)$, so $C_0$ can be expressed as equation (14).

$$C_0 = (\alpha''_0, \beta''_0) = ((-\frac{p'}{p})^2(\alpha_0 - p) + p, -\frac{p'}{p}\beta_0) \quad -----(14)$$

Herein, if $A_0$ is a point belonging to the function $y^2 = -4p(x - p)$, the route $A_0 \to C_0$ is symmetrical to the route $C_0 \to A_1$. That is, $A_1$ can be represented as the coordinates of $C_0$ or as well as the coordinates of $A_0$. Therefore, the coordinates of $A_1$ can be expressed as equation (15), wherein $T \equiv -\frac{p'}{p}(<0)$.

$$A_1 = (\alpha_1, \beta_1) = (T^2(\alpha''_0 - p) + p, T\beta''_0) = (T^4(\alpha_0 - p) + p, T^2\beta_0) -----(15)$$

In addition, equation (16) representing the relationship between $A_n$ and $A_{n-1}$ can be obtained from equation (15).

$$A_n = (\alpha_n, \beta_n) = (T^2(\alpha''_{n-1} - p) + p, T\beta''_{n-1}) = (T^4(\alpha_{n-1} - p) + p, T^2\beta_{n-1})$$
$$= (T^{4n}(\alpha_0 - p) + p, T^{2n}\beta_0)-----(16)$$

In the same manner, $B_n$, $C_n$ and $D_n$ can be expressed as equation (17) based on equations (13), (14) and (16).

$$B_n = (T\alpha_{n-1}, T\beta_{n-1}) = (T^{4n+1}(\alpha_0 - p) + Tp, T^{2n+1}\beta_0)$$

$$C_n = (T^2(\alpha_{n-1} - p) + p, T\beta_{n-1}) = (T^{4n+2}(\alpha_0 - p) + p, T^{2n+1}\beta_0) - - - - - - -(17)$$

$$D_n = (T^3(\alpha_{n-1} - p) + Tp, T^2\beta_{n-1}) = (T^{4n+3}(\alpha_0 - p) + Tp, T^{2(n+1)}\beta_0)$$

As can be understood from equation (16), $(\alpha_n, \beta_n)$ gradually converges into (p,0) as "n" increases. That is, the light radiated from the light source 304 reciprocates between (p,0) and (-p',0) and then converges into the x-axis 320, which is the optical axis. If the light detector 321 is located on the point (p,0) of the x-axis 320 while facing the zero point (focus), the light, which is radiated from the light source 304 and passes through the focus, converges into the light detector 321.

3. Length Of Optical Path· In Optical Cavity

The length of the optical path between $A_{n-1}$ and $A_n$ in the optical cavity is assumed as a circulation length L $(A_n)$. The main purpose of detecting the circulation length $L(A_n)$ is to obtain the total optical path of the light between the light source and the light detector. That is, after repeatedly detecting the length of the optical path whenever the light has circulated through the optical cavity one time, these lengths are added to each other, thereby obtaining the total optical path of the light. The total optical path is a main factor exerting great influence upon performance of the gas sensor. Thus, if one can analyze the total optical path, it is possible to effectively fabricate the gas sensor at a low cost according to various applications thereof.

Since the total optical path is represented as $\overline{A_{n-1}A_n} = \overline{A_{n-1}B_{n-1}} + \overline{B_{n-1}C_{n-1}} + \overline{C_{n-1}D_{n-1}} + \overline{D_{n-1}A_n}$, after obtaining each circulation length of the light, they are added to each other in terms of "n". Equation (18) can be obtained based on equations (16) and (17).

$$A_{n-1} = (T^{4(n-1)}(\alpha_0 - p) + p, T^{2(n-1)}\beta_0)$$

$$B_{n-1} = (T^{4n-3}(\alpha_0 - p) + Tp, T^{2n-1}\beta_0)$$

$$C_{n-1} = (T^{4n-2}(\alpha_0 - p) + p, T^{2n-1}\beta_0) \quad - - - - -(18)$$

$$D_{n-1} = (T^{4n-1}(\alpha_0 - p) + Tp, T^{2n}\beta_0)$$

$$A_n = (T^{4n}(\alpha_0 - p) + p, T^{2n}\beta_0)$$

If the circulation length $L(A_n)$ is calculated by using a length formula of a straight line, which is expressed in equation (18), and equations (8), (9), (16) and (17), equation (19) can be obtained.

$$Length \ of \overline{A_{n-1}B_{n-1}} = (1-T)(p - T^{4n-4}(\alpha_0 - p))$$

$$Length \ of \overline{B_{n-1}C_{n-1}} = (1-T)(p - T^{4n-3}(\alpha_0 - p))$$

$$Length \ of \overline{C_{n-1}D_{n-1}} = (1-T)(p - T^{4n-2}(\alpha_0 - p)) - - - -(19)$$

$$Length \ of \overline{D_{n-1}A_n} = (1-T)(p - T^{4n-1}(\alpha_0 - p))$$

$$L(A_n) = 4(1-T)p - T^{4n-4}(\alpha_0 - p)(1-T^4)$$

Based on equation (19), if the light radiated from the light source positioned on the point $(\alpha_0, \beta_0)$ has circulated through the optical cavity n times, the total optical path L can be expressed as equation (20).

$$L = \sum_{n=1}^{N} L(A_n) = \sum_{n=1}^{N}(4(1-T)p - T^{4n-4}(\alpha_0 - p)(1-T^4))$$

$$= 4Np(1-T) - (\alpha_0 - p)(1-T^4)\sum_{n=1}^{N} T^{4n-4} \qquad - - -(20)$$

$$= 4N(1-T)p - (\alpha_0 - p)(1-T^{4N})$$

Equation (20) includes two functions of T. If L = L(T) = $F_1(T)+F_2(T)$, $F_1(T)$ and $F_2(T)$ can be expressed as equations (21) and (22), respectively.

$$F_1(T) = 4N(1-T)p \quad -----(21)$$

$$F_2(T) = (p - \alpha_0)(1 - T^{4N}) \quad ---(22)$$

The reason of dividing the total optical path L into two functions is to calculate the contribution of two functions in relation to the total optical path L. If N (circulation time) increases, $F_1(T)$ increases and $F_2(T)$ decreases. Therefore, if N has a large value, the total optical path L is mainly influenced by $F_1(T)$. As expressed in equation (23), the relative contribution of $F_1(T)$ and $F_2(T)$ is represented as G(T).

$$G(T) \equiv \frac{F_2(T)}{F_1(T)} = \frac{(p - \alpha_0)(1 - T^{4N})}{4Np(1-T)} \quad ---(23)$$

Herein, $\alpha_0$ = p-p', which has been explained with reference to FIG. 3, is substituted to equation (23). As can be understood from FIG. 3, the circulation length increases if the light source is positioned at an outermost part of the optical cavity. Thus, although it will be explained later in detail, the point $A_0$ is an optimum position for the light source. However, the present invention does not limit the position of the light source to the point $A_0$ shown in FIG. 3.
If $\alpha_0$ = p-p' is applied to equation (23), equation (24) is obtained.

$$G(T) = -\frac{T(1 - T^{4N})}{4N(1-T)} \quad ---(24)$$

In equation (24), T has a negative value and N has a positive value, so equation (25) is satisfied.

$$G(T) = -\frac{T(1 - T^{4N})}{4N(1-T)} < -\frac{T}{4N(1-T)} < \frac{1}{8N}(T = \frac{1}{2}) ---(25)$$

If the circulation time N expressed in equation (25) is large enough, L can be approximately expressed as equation (26).

$$L = 4N(1-T)p = 4N(p + p') \quad ---(26)$$

4. Calculation Of Circulation Times N Based On Conditions of p and p' According To Beam Size And The Size Of Light detector

According to the present invention, the light traveling in the optical cavity circulates through the optical cavity and converges into the optical axis (see, equation (16). As can be understood from equation (16), the convergence speed of the light can be controlled according to the condition of T.' That is, as T goes to "-1",the convergence speed decreases. If T reaches "-1", an endless loop is presented. In contrast, the convergence speed increases as T goes to "0".
In practice, since the light detector has a predetermined size, the light traveling in the optical cavity is detected by means of the light detector after it has circulated through the optical cavity limited times. Therefore, it is possible to control the circulation time N of the light by adjusting the value of T. However, since the light source also has a predetermined size, when the light radiated from the light source reaches the point $A_1$ after the light has circulated through the optical cavity one time, the light may interfere with the light source. Thus, the circulation time of the light traveling in the optical cavity must be calculated by taking the above limitations into consideration until the light converges into the light detector.

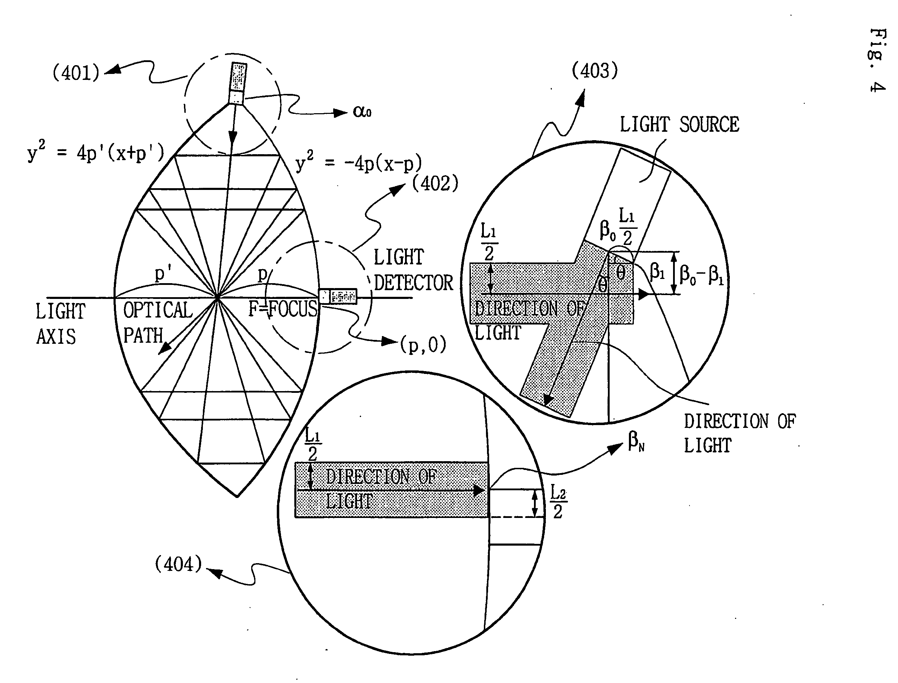

FIG. 4 shows light interference (see, a circle 401) caused by the light source and light detection condition (see, a circle 402) in consideration of the size of the light detector. A circle (403) is an enlarged view of the circle (402). Since a bundle of lights travels in the optical cavity, the light has a predetermined beam size. Thus, since the light has a predetermined beam size (see, $L_1$ in FIG. 4), the light radiated from the light source must not overlap with the light source when the light reaches the point $A_1$ after it has circulated through the optical cavity one time. Such an overlap signifies light loss, degrading performance of the gas sensor.

The size of light (beam size) radiated from the light source is identical to the size of a light outlet of the light source, so it is assumed that the size of the light source is equal to the beam size.

Thus, the condition for preventing the light from overlapping with the light source in the circle 403 shown in FIG. 4 can be expressed as equation (27).

$$\beta_0 - \beta_1 > \frac{L_1}{2} + \frac{L_1}{2} \sin\theta \quad ---(27)$$

If the light source is positioned as shown in FIG. 3, $\beta_0, \beta_1$ and $\sin\theta$ shown in equation (27) can be expressed as equation (28).

$$\beta_0 = 2\sqrt{pp'}$$
$$\beta_1 = (-\frac{p'}{p})^2 \beta_0 = 2\sqrt{pp'}(-\frac{p'}{p})^2 \quad ---(28)$$
$$\sin\theta = \frac{p-p'}{p+p'}$$

If equation (28) is applied to equation (27), equation (29) is obtained. Equation (29) represents the condition for preventing the light from overlapping with the light source after it has circulated through the optical cavity one time. Therefore, when fabricating the optical cavity according to the present invention, values of p and p' must be adjusted such that they satisfy equation (29).

$$2p\sqrt{-T}(1-T^2)(1-T) > L_1 \quad ---(29)$$

In addition, as shown in a circle 404, which is an enlarged view of the circle 402, if the light radiated from the light source converges into the light detector after it has circulated through the optical cavity N times, the light detection condition according to the size of the light detector must satisfy equation 30 in order to allow an $N^{th}$ circulation of the light to be valid on the assumption that the light is detected when a half of the beam size overlaps with the light detector. Herein, it is assumed that the light is detected by means of the light detector if a half of the beam size overlaps with a half of a sectional area of the light detector.

$$\beta_N > \frac{L_1}{2} + \frac{L_2}{2} \quad ---(30)$$

In the same way, if the condition of FIG. 3 is applied to equation (30), $\beta_N = (-\frac{p'}{p})^{2N} \beta_0 = (-\frac{p'}{p})^{2N} 2\sqrt{pp'}$ are established. Thus, equation (30) can be expressed as equation (31).

$$(-\frac{p'}{p})^{2N} 2\sqrt{pp'} > \frac{L_1}{2} + \frac{L_2}{2} \quad ---(31)$$

If both sides of equation (29) are rearranged through the natural logarithm, equation (32) is obtained.

$$N < \frac{\ln(\frac{L_1 + L_2}{4\sqrt{pp'}})}{2\ln(\frac{p'}{p})} \quad ---(32)$$

Equation (32) represents the condition for the maximum circulation time of the light according to p, p', $L_1$, and $L_2$.

Thus, when fabricating the gas cell according to the present invention, the conditions of p and p' are applied based on equation (29), and the circulation time of the light is calculated based on equation (32). For instance, when fabricating the optical cavity under the condition of $L_1$ = 4mm, $L_2$ = 4mm, p =10mm and p' = 9mm, the above condition satisfies equation (29), so the circulation time of the light N (N = 7) can be obtained through equation (32). If the above result is applied to equation (26), the total length of the optical path in the optical cavity is about 532mm.

## 5. Stable Analysis For Deviated Optical Path

When measuring the density of gas in order to fabricate the gas cell having the superior efficiency, it is preferred if intensity of the light radiated from the light source has a higher value. However, when taking the property of light emitting materials of the light source and the life span of the light source into consideration, it is difficult to use the light having desired intensity. For this reason, in order to effectively use the light having limited intensity, a convex lens or a concave lens allowing the light, which is isotropically radiated from the light source, to travel along one direction is employed so as to collect the light into a common focus. However, although the convex lens or the concave lens can collect the light into one focus in theory, it is very difficult to collect the light into one focus in practice. In addition, if the gas cell is fabricated while taking the perfect focusing of the convex lens or the concave lens into consideration, great time and cost expenses may incur during the fabrication process for the gas cell. Even if the light can be collected in one focus through various efforts, if an optical system provided in the gas cell is misaligned due to external impact or defects of the gas cell occurring during the fabrication process, the light radiated from the light source may travel while deviating from the focus. In this case, quantity of the light converged into the light detector shall be reduced, so the measurement efficiency of the gas cell is lowered, thereby degrading performance of the gas cell.

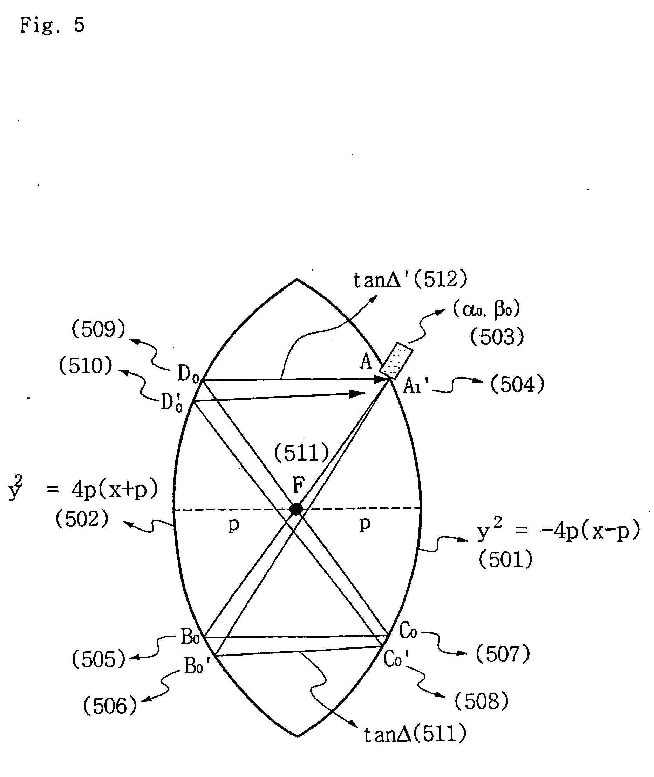

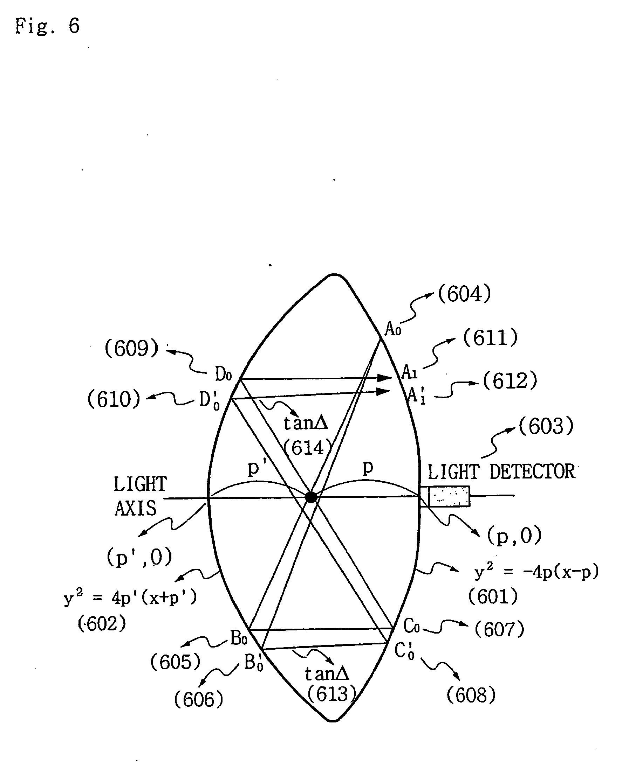

The optical cavity of the gas cell according to the present invention provides superior stability under the above circumstances. This will be described below with reference to FIGS. 5 and 6.

FIG. 5 is a view illustrating the analysis procedure for an optical path of light when the light travels while deviating from a focus in an optical cavity including two parabolas having the same focus length. That is, FIG. 5 is a view for explaining stability when two quadratic parabolic mirrors 501 and 501 forming the optical cavity have the same focus length (p = p').

It should be noted that, even if the two parabolas have different focus lengths (in a case of FIG. 6), it is possible to analyze the optical path of the light based on the procedure shown in FIG. 5.

Referring to FIG. 5, if the two parabolas have the same focus length, the light radiated from the light source 503 returns to its initial position after it passes through the common focus. That is, the light radiated onto the focus from the light source 503 at point A returns to the point A by passing through points B, C and D. This can be understood from equation (16) wherein T = -1. Under the conditions that the light radiated from the light source 503 travels while slightly deviating from the focus so that the light may reach the point $B_0'$, rather than the point $B_0$, the deviation values of the light in x and y-axis directions are assumed as $\varepsilon_{(0)1}$ and $\delta_{(0)1}$, respectively, and the light has the optical path of $A_0\ 503 \rightarrow B_0'\ 506 \rightarrow C_0'\ 508 \rightarrow D_0'\ 510 \rightarrow A_1'\ 504$, the coordinates of the point $A_1'$ can be calculated when the light radiated from the light source $A_0$ reaches the point $A_1'$ after it has circulated through the optical cavity and then the coordinates of point $A_1'$ can be generalized based on the relationship between $A_0$ and $A_1'$, thereby calculating the optical path of the light.

The coordinates of points $A_0$ 503, $B_0'$ 506, $C_0'$ 508, Do' 510 and A1' 504 are given by below equations 33. Herein, it is assumed that absolute values of $\varepsilon_{(0)1}$, $\varepsilon_{(0)2}$, $\delta_{(0)1}$, $\delta_{(0)2}$, $\mu_{(0)1}$, $\mu_{(0)2}$, $\nu_{(0)1}$, and $\nu_{(0)2}$ are significantly smaller than the value of p, and the multiplicative values thereof converge into "0".

$$A_0 = (\alpha_0, \beta_0)$$
$$B'_0 = (\alpha'_0, \beta'_0) = (-\alpha_0 + \varepsilon_{(0)1}, -\beta_0 + \delta_{(0)1})$$
$$C'_0 = (\alpha''_0, \beta''_0) = (-\alpha'_0 + \mu_{(0)1}, \beta'_0 + \nu_{(0)1}) = (\alpha_0 - \varepsilon_{(0)1} + \mu_{(0)1}, -\beta_0 + \delta_{(0)1} + \nu_{(0)1})$$
$$D'_0 = (\alpha'''_0, \beta_0) = (-\alpha''_0 + \varepsilon_{(0)2}, -\beta''_0 + \delta_{(0)2}) \quad ------------------(33)$$
$$A'_1 = (\alpha_1, \beta_1) = (-\alpha'''_0 + \mu_{(0)2}, \beta'''_0 + \nu_{(0)2}) = (\alpha''_0 - \varepsilon_{(0)2} + \mu_{(0)2}, -\beta''_0 + \delta_{(0)2} + \nu_{(0)2})$$

First, the optical path of $A_0 \to B_0' \to C_0'$ will be analyzed in order to use the symmetrical characteristic of the optical cavity according to the present invention. In this case, the coordinates of $C_0'$ with respect to $\varepsilon_{(0)1}$ and $\delta_{(0)1}$ are denoted as $\alpha_0, \beta_0, \varepsilon_{(0)1}$ and $\delta_{(0)1}$. To this end, since the light reaches $C_0'$ while being reflected from $B_0'$, the reflection law of light is utilized.

When it is assumed that the gradient of $\overline{AB'}$ is $\tan\theta_{AB'}$ and the gradient of a normal line of B' is $\tan\theta_{B'\perp}$, $\tan\Delta$ is expressed as follows through the subtraction formula of the trigonometric function.

$$\tan(\theta_{A_0B_0'} - \theta_{B'_0\perp}) = \tan(\theta_{B'_0\perp} - \Delta) \quad ---(34)$$

$$\tan\Delta = \frac{2\tan\theta_{B'_0\perp} - \tan\theta_{A_0B'_0}(1 - \tan^2\theta_{B'_0\perp})}{2\tan\theta_{A_0B'_0}\tan\theta_{B'_0} + (1 - \tan^2\theta_{B'_0\perp})} ---(35)$$

From equation (33),

$$\tan\theta_{AB'} = \frac{\beta'_0 - \beta_0}{\alpha'_0 - \alpha_0} = \frac{-2\beta_0 + \delta_{(0)1}}{-2\alpha_0 + \varepsilon_{(0)1}} ---(36)$$

is obtained. In addition, $(\alpha'_0, \beta'_0)$ is a point belonging to the function of $y^2 = 4p(x + p)$, the gradient $(\tan\theta_{B'\perp})$ of the normal line in the above point is expressed as equation (37).

$$\tan\theta_{B'_0\perp} = -\frac{\beta'_0}{2p} ---(37)$$

Thus, if equations (36) and (37) are applied to equation (35), $\tan\Delta$ is expressed as equation 38.

$$\tan\Delta = \frac{p\varepsilon_1}{\beta_0(2p - \alpha_0)} = -\frac{\delta_1}{2(2p - \alpha_0)} ---(38)$$

Since $\tan\Delta$ is the gradient of $\overline{B'_0C'_0}$, equation (39) can be obtained by using the gradient formula shown in equation (33).

$$\tan\Delta = \frac{p\varepsilon_1}{\beta_0(2p - \alpha_0)} = -\frac{\delta_1}{2(2p - \alpha_0)} = \frac{\beta''_0 - \beta'_0}{\alpha''_0 - \alpha'_0} ---(39)$$

If equation (33) is applied to equation (39), the relationship between $\varepsilon_{(0)1}$ and $\mu_{(0)1}$ can be obtained as expressed in equation (40).

$$\mu_{(0)1} = \frac{2(p - \alpha_0)}{2p - \alpha_0}\varepsilon_{(0)1} \quad ---(40)$$

Herein, the relationship between $\delta_{(0)1}$ and $v_{(0)1}$ is not taken into consideration. This is because the relationships between $\delta_{(0)1}$ and $\varepsilon_{(0)1}$ and between $v_{(0)1}$ and $\mu_{(0)1}$ can be obtained from the quadratic parabolic equation.

The light, which reaches $C_0'$ due to symmetrical characteristic of the optical cavity according to the present invention may be regarded as a new light source, so equation (41) can be obtained based on equations (33) and (40).

$$\mu_{(0)2} = \frac{2(p - \alpha''_0)}{2p - \alpha''_0}\varepsilon_{(0)2} ---(41)$$

Thus, it is possible to obtain the coordinates of the point $A_1$' from the relationship between $\varepsilon_{(0)1}$ and $\varepsilon_{(0)2}$. In addition, if it is assumed that the gradient of $\overline{C'_0 D'_0}$ is $\tan\theta_{C0'D0'}$ and the gradient of a normal line of $B_0$' is $\tan\theta_{B0'\perp}$, equation (45) is induced from the subtraction formula of the trigonometric function.

$$\tan(\theta_{C'_0 D'_0} - \theta_{B'_0 \perp}) = \tan(\theta_{B'_0 \perp} - \Delta)$$

$$\tan\theta_{C'_0 D'_0} = \frac{2\tan\theta_{B'_0 \perp} + \tan\Delta(1 - \tan^2\theta_{B'_0 \perp})}{2\tan\theta_{B'_0 \perp}\tan\Delta + 1 - \tan^2\theta_{B'_0 \perp}} = \frac{\beta'''_0 - \beta''_0}{\alpha'''_0 - \alpha''_0} ---(45)$$

If equation (45) is rearranged with equations (38) and (33) and , which is induced from the normal equation of the quadratic parabolic curve, the following relationship can be obtained between $\varepsilon_{(0)1}$ and $\varepsilon_{(0)2}$.

$$\varepsilon_{(0)1} = -\varepsilon_{(0)2} ---------(46)$$

If equation (46) is applied to equation (41), an x-coordinate of $A_1$' can be induced as expressed in equation (47).

$$\alpha'_1 = \alpha''_0 - \varepsilon_{(0)2} + \mu_{(0)2} = \alpha_0 - \varepsilon_{(0)1} + \mu_{(0)1} - \varepsilon_{(0)2} + \mu_{(0)2}$$

$$= \alpha_0 + \frac{2(p - \alpha_0)}{2p - \alpha_0}\varepsilon_{(0)1} + \frac{2(p - \alpha''_0)}{2p - \alpha''_0}\varepsilon_{(0)2} ---(47)$$

Equation (47) is obtained under the condition of

$$\varepsilon_{(0)2} \times \varepsilon_{(0)1} = 0, \quad \varepsilon_{(0)2} \times \mu_{(0)1} = 0, \quad \text{and} \quad \frac{1}{1-x} = 1 + x \ (|x| << 1)$$

As can be understood from equation (47), in the optical cavity including two quadratic parabolas having the same p value and sharing the common focus, the light radiated from the light source $A_0$ returns to its initial position ($A_0 = A_0$) after it has circulated through the optical cavity one time even if the light slightly deviates from the focus ($\varepsilon_{(0)1} << p$). Therefore, it is assumed that the light radiated from the light source in the optical cavity including two parabolas, which have different focus lengths (p and p' (0<p'<p)) and share the optical axis and the focus, can travel without significantly deviating from its original route (the route allowing the light to precisely pass through the focus), even if the light may slightly deviate from the focus.

On the basis of the above assumption, the following description will be made in relation to deviation and the allowable deviation degree of the light with respect to the focus when the light radiated from the light source in the optical cavity including two parabolas, which face each other such that they have different focus lengths and share the optical axis and the focus, slightly deviates from the focus.

FIG. 6 is a view illustrating the optical path of light when two quadratic parabolic mirrors have focus lengths different from each other. As mentioned above, the two quadratic parabolic mirrors correspond to the quadratic functions

of $y^2 = -4p(x - p)$ 601 and $y^2 = 4p'(x + p')$ 602, respectively, wherein 0<p'<p, and $T \equiv -\frac{p'}{p}$ .

The light detector 603 is positioned in the point (p,0) located on the optical axis and the light radiated from a predetermined light source $A_0$ 604 toward the focus converges into the light detector after it has circulated through the optical cavity so that it can be detected by means of the light detector. As mentioned above, after finding the regularity of the light path through one circulation of the light in the optical cavity, it is generalized with regard to total circulations of the light.

When it is assumed that the light radiated toward the focus from the predetermined light source 604 has circulated through the optical cavity one time by way of $A_0$ 604→ $B_0$ 605→ $C_0$ 607→ $D_0$ 609→ $A_1$ 611, and the light deviating from the focus has circulated through the optical cavity one time by way of $A_0$ 604→ $B'_0$ 606→ $C'_0$ 608→ $D'_0$ 610→ $A'_1$ 612, the coordinates of the light can be expressed as equations (48) and (49) with reference to equations (18) and (33).

$$A_0 = (\alpha_0, \beta_0)$$
$$B_0 = (T\alpha_0, T\beta_0)$$
$$C_0 = (T^2(\alpha_0 - p) + p, T\beta_0)$$
$$D_0 = (T^3(\alpha_0 - p) + Tp, T^2\beta_0) \quad -----(48)$$
$$A_1 = (T^4(\alpha_0 - p) + p, T^2\beta_0)$$

$$A_0 = (\alpha_0, \beta_0)$$
$$B'_0 = (\alpha'_0, \beta'_0) = (T\alpha_0 + \varepsilon_{(0)1}, T\beta_0 + \delta_{(0)1})$$
$$C'_0 = (\alpha''_0, \beta''_0) = (T^2(\alpha_0 - p) + p + \mu_{(0)1}, T\beta_0 + \nu_{(0)1})$$
$$D'_0 = (\alpha'''_0, \beta'''_0) = (Ta''_0 + \varepsilon_{(0)2}, T\beta''_0 + \delta_{(0)2}) \quad ----(49)$$
$$A'_1 = (\alpha'_1, \beta'_1) = (T^2(\alpha''_0 - p) + p + \mu_{(0)2}, T\beta''_0 + \nu_{(0)2})$$

The light radiated from the light source slightly deviates from the focus so that the light may deviate by $\varepsilon_{(0)1}$ and $\delta_{(0)1}$ in the x and y-axe directions, respectively, at the point $B_0$. At this time, as mentioned above, it is assumed that absolute values of $\varepsilon_{(0)1}$, $\varepsilon_{(0)2}$, $\delta_{(0)1}$, $\delta_{(0)2}$, $\mu_{(0)1}$, $\mu_{(0)2}$, $\nu_{(0)1}$, and $\nu_{(0)2}$ are significantly smaller than the value of p, and the multiplicative values thereof converges into "0". That is, on the basis of the fact that the light radiated from the light source returns to its initial position after it has circulated through the optical cavity one time under the condition of p=p', it is assumed that the light radiated from the light source only slightly deviates from its original route when the light slightly deviates from the focus.

Thus, the analysis for the optical path of the light under the condition of p≠p' will be performed in the same manner as the analysis for the optical path of the light under the condition of p=p'. When the light radiated from the light source $A_0$ 604 slightly deviates from the focus so that the light may reach the point $C'_0$ while being reflected from the point $B'_0$, if the gradient of $\overline{A_0B_0}'$ is $\tan\theta_{A0B0'}$ and the gradient of $\overline{B'_0C_0}'$ is $\tan\Delta(=\tan\theta_{B'0C0'})$, the above-mentioned equations (34) and (35) are utilized while applying the law of light reflection and the subtraction formula of the trigonometric function thereto.

$$\tan(\theta_{A_0B'_0} - \theta_{B'_0\perp}) = \tan(\theta_{B'_0\perp} - \Delta) \quad ---(34)$$

$$\tan \Delta = \frac{2\tan\theta_{B'_0\perp} - \tan\theta_{A_0B'_0}(1 - \tan^2\theta_{B'_0\perp})}{2\tan\theta_{A_0B'_0}\tan\theta_{B'_0\perp} + (1 - \tan^2\theta_{B'_0\perp})} ---(35)$$

Thus, equation (50) can be obtained from equation (49).

$$\tan\theta_{A_0B'_0} = \frac{\beta'_0 - \beta_0}{\alpha'_0 - \alpha_0} = \frac{(T-1)\beta_0 + \delta_{(0)1}}{(T-1)\alpha_0 + \varepsilon_{(0)1}} ----(50)$$

In addition, $B'_0$ is a point belonging to the function of $y^2 = -4p(x - p)$, the gradient $\tan\theta_{B'\perp}$ of the normal line in the above point is expressed as equation (51).

$$\tan\theta_{B'_0\perp} = \frac{\beta'_0}{2p} ---(51)$$

Thus, if equations (50) and (51) are applied to equation (35), $\tan\Delta$ is expressed as equation (52).

$$\tan \Delta = \frac{2p\varepsilon_{(0)1}}{T(T-1)\beta_0(2p-\alpha_0)} = -\frac{\delta_{(0)1}}{(T-1)(2p-\alpha_0)} \quad ----(52).$$

Since $\tan\Delta$ is the gradient of $C'_0 B'_0$, equation (53) can be obtained by using the gradient formula.

$$\tan \Delta = \frac{\beta''_0 - \beta'_0}{\alpha''_0 - \alpha'_0} = \frac{\nu_{(0)1} - \delta_{(0)1}}{T(T-1)\alpha_0 - p(T-1)(T+1) + \mu_{(0)1} - \varepsilon_{(0)1}} \quad --- (53)$$

Since equation (52) is identical to equation (53), the relationship between $\varepsilon_{(0)1}$ and $\mu_{(0)1}$ can be calculated.

Herein, if the coordinates of $B'_0$ are substituted to the function of $y^2 = -4p(x-p)$, $\delta_{(0)1} = -\dfrac{2p}{T\beta_0}\varepsilon_{(0)1}$ is obtained.

In addition, if the coordinates of $C'_0$ are substituted to the function of $y^2 = 4p'(x + p')$, $\nu_{(0)1} = \dfrac{2p'}{T\beta_0}\mu_{(0)1}$ is obtained.

$$\mu_{(0)1} = \frac{p(T+1) - 2T(\alpha_0 - p)}{2p - \alpha_0}\varepsilon_{(0)1} \quad ---(54)$$

The light, which reaches the point Co', is reflected from the point $C_0'$, so the reflected light may be regarded as a new light source. Accordingly, the relationship between $\varepsilon_{(0)2}$ and $\mu_{(0)2}$ can be expressed as equation (55) similar to equation (54).

$$\mu_{(0)2} = \frac{p(T+1) - 2T(\alpha''_0 - p)}{2p - \alpha'_0}\varepsilon_{(0)2} \quad ----(55)$$

Therefore, $\mu_{(0)2}$ can be obtained based on the relationship between $\varepsilon_{(0)1}$ and $\varepsilon_{(0)2}$, so the coordinates of the point $A_1'$ 612 can be obtained. Thus, it is assumed that the gradient of $\overline{C'_0 D'_0}$ is $\tan\theta_{C'0D0'}$ and the gradient of a normal line of $C_0'$ is $\tan\theta_{C0'\perp}$, and equation (45) is used again from the subtraction formula of the trigonometric function.

$$\tan(\theta_{C'_0 D'_1} - \theta_{B'_0 \perp}) = \tan(\theta_{B'_0 \perp} - \Delta)$$

$$\tan \theta_{C'_0 D'_0} = \frac{2\tan \theta_{B'_0 \perp} + \tan \Delta(1 - \tan^2 \theta_{B'_0 \perp})}{2\tan \theta_{B'_0 \perp}\tan \Delta + 1 - \tan^2 \theta_{B'_0 \perp}} = \frac{\beta'''_0 - \beta''_0}{\alpha'''_0 - \alpha''_0} \quad ---(45)$$

Since the gradient of the normal line at the point $B_0'$ is $\tan \theta_{B'_0 \perp} = \dfrac{\beta''_0}{2p}$, if equation (45) is rearranged with equations (49) and (52), the following relationship can be obtained between $\varepsilon_{(0)1}$ and $\varepsilon_{(0)2}$.

$$\varepsilon_{(0)2} = -\frac{2p - \alpha''_0}{2p - \alpha_0}\varepsilon_{(0)1} \quad ---(56)$$

If equations (54), (55) and (56) are applied to equation (49), equation (49) can be rearranged in terms of $\alpha'_1$ as expressed in equation (57).

$$\alpha'_1 = T^2(\alpha''_0 - p) + p + \mu_{(0)2}$$

$$= T^2[T^2(\alpha_0 - p) + \mu_{(0)1}] + p + \frac{p(T+1) - 2T(\alpha''_0 - p)}{2p - \alpha''_0} \varepsilon_{(0)2}$$

$$= T^4(\alpha_0 - p) + p + T^2\left[\frac{p(T+1) - 2T(\alpha_0 - p)}{2p - \alpha_0}\varepsilon_{(0)1}\right] - \frac{p(T+1) - 2T^3(\alpha_0 - p)}{2p - \alpha_0}\varepsilon_{(0)1}$$

$$= T^4(\alpha_0 - p) + p + \frac{p(T+1)(T^2-1)}{2p - \alpha_0}\varepsilon_{(0)1} ------(57)$$

According to equation (57), if the light radiated from the light source 604 travels while slightly deviating from the focus, the light reaches the point $\alpha'_1$ after it has circulated the optical cavity one time. In order to generalize this, in the following description, $\alpha'_1$ will be denoted without the prime mark. Since the prime mark is used in order to distinguish the light, which deviates from the focus, from the light passing through the focus, it may not limit the scope of the present invention even if the prime mark is omitted for generalization.

Equation (57) can be generalized as expressed in equation (58).

$$\alpha_n = T^4(\alpha_{n-1} - p) + p + \frac{p(T+1)(T^2-1)}{2p - \alpha_{n-1}}\cdot\varepsilon_{(n-1)1} ---(58)$$

In addition, since the light reflected from the point $C_0'$ may be regarded as a new light source, $\varepsilon_{(1)1}$ and $\varepsilon_{(0)2}$ have the relationship as expressed in equation (59).

$$\varepsilon_{(1)1} = -\frac{2p - \alpha_1}{2p - \alpha''_0}\varepsilon_{(0)2} ---(59)$$

Therefore, the relationship between $\varepsilon_{(1)1}$ and $\varepsilon_{(0)2}$ as expressed in equation (60) can be induced from equations (56) and (59).

$$\varepsilon_{(1)1} = -\frac{2p - \alpha_1}{2p - \alpha''_0}\varepsilon_{(0)2} = (-1)^2 \frac{2p - \alpha_1}{2p - \alpha''_0} \times \frac{2p - \alpha''_0}{2p - \alpha_0}\varepsilon_{(0)1} = \frac{2p - \alpha_1}{2p - \alpha_0}\varepsilon_{(0)1} ---(60)$$

Herein, multiplicative values of $\varepsilon_{(0)1}$, $\varepsilon_{(0)2}$, $\mu_{(0)1}$, and $\mu_{(0)2}$ converge into "0". If equation (60) is applied to equation (56), equation (61) can be obtained through generalization.

$$\varepsilon_{(n)1} = \frac{2p - \alpha_n}{2p - \alpha_0}\varepsilon_{(0)1} ---(61)$$

In addition, if equation (61) is applied to equation (58), equation (62) can be obtained through generalization.

$$\alpha_n = T^4(\alpha_{n-1} - p) + p + \frac{p(T+1)(T^2-1)}{2p - \alpha_{n-1}}\varepsilon_{(n-1)1}$$

$$= T^4(\alpha_{n-1} - p) + p + \frac{p(T+1)(T^2-1)}{2p - \alpha_0}\varepsilon_{(0)1} ----(62)$$

$$\alpha_n - p = T^4(\alpha_{n-1} - p) + \frac{p(T+1)(T^2-1)}{2p - \alpha_0}\varepsilon_{(0)1} ---(63)$$

If n→∞ then $\alpha_n = \alpha_{n-1}$, so when it is assumed that $\alpha_\infty - p = \sigma$, σ is a negative number having a very small absolute value (equation (62) is a convergence function). Thus, when n→ ∞, equation (63) can be expressed as equation (64).

$$\sigma = T^4\sigma + \frac{p(T+1)(T^2-1)}{2p-a_0}\varepsilon_{(0)1} \ ---- (64)$$

When rearranging equation (64) in terms of σ, equation (65) can be obtained.

$$\sigma = -\frac{p(T+1)}{(1+T^2)(2p-\alpha_0)}\varepsilon_{(0)1} \ ---(65)$$

If $\beta_n$ converges into $\gamma$ when n→ ∞, equation (66) can be obtained with respect to + x-axis based on the function of $y^2 = -4p(x - p)$.

$$\sigma = -\frac{\gamma^2}{4p} = -\frac{p(T+1)}{(1+T^2)(2p-\alpha_0)}\varepsilon_{(0)1} \ ---(66)$$

In addition, equation (66) can be rearranged in terms of $\gamma$ as expressed in equation (67), wherein the value of $\gamma$ is set as positive numbers for convenience under the condition of $\varepsilon_{(0)1}$ >0.

$$\gamma = \sqrt{\frac{4p^2(T+1)}{(1+T^2)(2p-\alpha_0)}\varepsilon_{(0)1}} \ ---(67)$$

Herein, $\gamma$ is a y-coordinate of the point to which the light, which is radiated from the light source and travels while deviating from the focus, finally converges. If the diameter of the light detector is set to $L_2$ as shown in FIG. 4, the condition $\gamma < \frac{L_2}{2}$ must be satisfied. Thus, equation (67) must be changed into equation (68).

$$\gamma = \sqrt{\frac{4p^2(T+1)}{(1+T^2)(2p-\alpha_0)}\varepsilon_{(0)1}} < \frac{L_2}{2} ---(68)$$

In addition, equation (68) also represents the condition of $\varepsilon_{(0)1}$ defining the maximum limit of light deviation for allowing the light radiated from the light source to be detected by the light detector. Thus, equation (68) can be replaced with equation (69) in terms of $\varepsilon_{(0)1}$.

$$\varepsilon_{(0)1} < \frac{(2p-\alpha_0)(1+T^2)}{16p^2(T+1)}L_2^2 ---(69)$$

If dispersion $\varepsilon_{(0)1}$ of the light radiated from the light source satisfy equation (69), the light is detected by means of the light detector. If the dispersed light does not satisfy equation (69), it may endlessly circulate through the optical cavity to be ultimately extinguished within the optical cavity. In addition, when the light radiated from the light source is dispersed, it is possible to calculate intensity of the light, which actually contributes for the gas density measurement, based on equation (69).

Ideally, the light radiated from a point light source has an isotropic characteristic. However, in practice, the light source radiates the light in a Gaussian pattern depending on the state of the light source, in which the light having highest intensity is radiated in the specific direction and intensity of the light gradually reduced about the specific direction. According to the present invention, the point light source is equipped with concave mirrors or lenses, so the present invention not only radiates the light having highest intensity in the specific direction, but also provides the parallel light or light converged into one spot by adjusting the concave mirrors and lenses. Nevertheless, elements of the gas cell may be misaligned due to external impact or defects of the gas cell, which may occur during the fabrication process. In this case, the light radiated from the light source may travel while deviating from the desired optical path. For this reason, stability of the gas cell against the light deviation is calculated based on equation (69). For instance, in the gas cell shown in FIG. 1, if p = 15mm, p' = 13.5mm, T = -0.9, L2 = 4mm and $\alpha0$ = p-p', $\varepsilon(0)1$ shown in equation (69) can be represented as

$$\varepsilon_{(0)1} < \frac{(1+T^2)(p+p')}{16p^2(T+1)} L_2^2 = 2.29mm \ .$$

That is, the light can be detected by means of the light detector if the light deviates from the optical path to the x-axis direction within the range of 2.29mm. Since this result is obtained by taking only one direction (i.e. +x axis) into consideration, the light detector can stably detect the light even if the light is dispersed in the range of 4.58mm when taking the -x axis also into consideration.

6. Analysis Example Of Optical Cavity Fabricated According To The Present Invention

Hereinafter, an analysis scheme for the optical cavity fabricated according to the present invention will be described with reference to equations (26), (29) and (32).

After fabricating an optical cavity having focus lengths (p = 15mm and p' = 13.5mm), a beam size ($L_1$ = 4mm) and a size of the light detector ($L_2$ = 4mm), the overlap between the beam size and the size of the light detector is inspected by using equation (29).

At this time, since T = 0.9,

$$2p\sqrt{-T}(1-T^2)(1-T) > L_1 \ \rightarrow \ 2 \times 15(mm) \times 0.949 \times 0.19 \times 1.9 = 10.3(mm) > 4(mm)$$ is resulted, which satisfy equation (29). Then, the circulation time of the light in the optical cavity is calculated based on equation (32) as follows:

$$N < \frac{\ln(\frac{L_1+L_2}{4\sqrt{pp'}})}{2\ln(\frac{p'}{p})} = \frac{\ln(\frac{8}{4\sqrt{202.5}})}{2\ln(0.9)} = 9.90$$

Therefore, the light radiated from the light source is detected by means of the light detector after it has circulated through the optical cavity nine times. In this case, the length (L) of the optical path can be calculated by using equation (26).

$$L = \sum_{n=1}^{N} L(a_n) = 4N(p+p') = 4 \times 10 \times 28.5 = 1,140mm$$

That is, the length of the optical path is 114cm.

Table 1 shows various parameters when the gas cell is fabricated according to the present invention ($L_1 = L_2$ = 4mm).

Table 1 -The circulation time (N) and length (L) of the optical path according to p and p' in consideration of the beam size and the size of the light detector.

|  | p (m) | p' (mm) | N | L (mm) |
|---|---|---|---|---|
| 1 | 10 | 7 | 2 | 136 |
| 2 | 10 | 8 | 3 | 216 |
| 3 | 10 | 9 | 7 | 532 |
| 4 | 12 | 10.8 | 8 | 730 |
| 5 | 12 | 11.4 | 17 | 1591 |
| 6 | 15 | 13.5 | 9 | 1026 |
| 7 | 15 | 14.25 | 19 | 2223 |

(continued)

|  | p (m) | p' (mm) | N | L (mm) |
|---|---|---|---|---|
| 8 | 20 | 18 | 10 | 1520 |
| 9 | 20 | 19 | 23 | 3588 |

For instance, if it is necessary to fabricate the gas cell having the size of 50mm × 25mm, the gas cell having the optical path of about 1590mm (1.59m) is fabricated according to number "5" in Table 1.

Although a preferred embodiment of the present invention has been described for illustrative purposes, those skilled in the art will appreciate that various modifications, additions and substitutions are possible, without departing from the scope of the invention as disclosed in the accompanying claims.

**Claims**

1.  A gas cell comprising: an optical cavity, which is optically closed, a light source (304), and a light detector (321), the cavity comprising: two concave mirrors (301, 302) aligned in opposition to each other, wherein light incident into the optical cavity is alternatively reflected from the concave mirrors and the concave mirrors include parabolic concave mirrors (301, 302) and parabolas of the parabolic concave mirrors share a focus (303) and an optical axis (320) wherein the parabolas of the parabolic concave mirrors have focal lengths different from each other (305, 306), the light source (304) is located at a point of the parabolic concave mirror having the longer focal length so that the light radiated from the light source toward the focus (303) can converge into the optical axis (320) after the light has circulated through the optical cavity while being reflected from the parabolic concave mirrors (301, 302), so that the circulated light can be detected by the light detector (321) located on the optical axis (320).

2.  The gas cell as claimed in claim 1, wherein an optical path of the light varies depending on a ratio of the focal lengths of the two parabolas.

3.  The gas cell as claimed in claim 1, wherein a length of an optical path of the light in the optical cavity before the light is detected by the light detector satisfies following equation:

$$L = 4Np(1-T) = 4N(p + p')$$

wherein N is a circulation time of the light, p and p' are focal lengths of the two parabolas, and $T = -p'/p$.

4.  The gas cell as claimed in claim 3, wherein, when a position of the light source is $A_0=(\alpha_0, \beta_0)$, a position of the point on the concave mirror, from which the light is reflected after the light has circulated through the optical cavity one time, is $A_1=(\alpha_1, \beta_1)$ and a position of the light detector for detecting the light after the light has circulated through the optical cavity N times is $AN=(\alpha_N, \beta_N)$, a beam size of the light and a radius of the sectional area of the light detector

satisfy following equation:    $\beta_0 - \beta_1 > \dfrac{L_1}{2} + \dfrac{L_1}{2}\sin\theta$    and    $\beta_N > \dfrac{L_2}{2}$

wherein $L_1$ is the beam size of the light, $L_2$ is the radius of the sectional area of the light detector, and θ is an incident angle of the light from the light source with respect to a normal direction of the optical axis .

5.  The gas cell as claimed in claim 4, wherein, when the light radiated from the light source is first reflected from a position $B'=(\alpha_0 + \varepsilon_1, -\beta_0 + \delta_1)$, the value of $\varepsilon_1$ representing a dispersion degree of the light radiated from the light source satisfies following equation:

$$\varepsilon_1 < \frac{(2p - \alpha_0)(1 + T^2)}{16p^2(T + 1)} L_2^2 .$$

6. A method of fabricating a gas sensor comprising the steps of: aligning two concave mirrors in opposition to each other, thereby forming an optical cavity, which is optically closed; installing a light source in the optical cavity; and installing a light detector in the optical cavity for detecting light incident into the optical cavity from the light source wherein the optical cavity is formed using two parabolic concave mirrors and parabolas of the parabolic concave mirrors share a focus and an optical axis and wherein the parabolic concave mirrors have focal lengths different from each other and are aligned such that they share a focus and an optical axis, and the light source is located at a point of the parabolic concave mirror having the longer focal length so that the light radiated from the light source toward the focus can converge into the optical axis after the light has circulated through the optical cavity while being reflected from the parabolic concave mirrors, and wherein the light detector is located on the optical axis.

7. The method as claimed in claim 6, wherein an optical path of the light is controlled by adjusting a ratio of the focal lengths of the two parabolas.

8. The method as claimed in claim 6, further comprising a step of adjusting a ratio of the focal length between the two parabolas in such a manner that a length of an optical path of the light in the optical cavity before the light is detected by the light detector satisfies following equation:

$$L = 4Np(1-T) = 4N(p+p')$$

wherein N is a circulation time of the light, p and p' are focal lengths of the two parabolas, and T = -p' /p.

9. The method as claimed in claim 8, wherein, when a position of the light source Is $A_0 = (\alpha_0,\beta_0)$, a. position of the point on the concave mirror, from which the light is reflected after the light has circulated through the optical cavity one time, is $A_1 = (\alpha_1,\beta_1)$ and a position of the light detector for detecting the light after the light has circulated through the optical cavity N times is $AN = (\alpha_N,\beta_N)$ the light source is installed in the optical cavity in such a manner that a beam size of the light satisfies the following equation:

$$\beta_0 - \beta_1 > \frac{L_1}{2} + \frac{L_1}{2}\sin\theta$$

wherein $L_1$ is the beam size of the light, and $\theta$ is an incident angle of the light from the light source with respect to a normal direction of the optical axis, and the light detector is installed in the optical cavity In such a manner that a radius of the sectional area of the light detector satisfies following equation:

$$\beta_N > \frac{L_2}{2}$$

wherein $L_2$ is the sectional area of the light detector.

10. The method as claimed in claim 9, wherein, when the light radiated from the light source is first reflected from a position $B' = (-\alpha_0 + \varepsilon_1, -\beta_0 + \delta_1)$, the light source is installed in the optical cavity in such a manner that the value of $\varepsilon_1$ representing a dispersion degree of the light radiated from the light source satisfies following equation

$$\varepsilon_1 < \frac{(2p-\alpha_0)(1+T^2)}{16p^2(T+1)}L_2^2 .$$

**Patentansprüche**

1. Eine Gaszelle, die Folgendes umfasst: einen optischen Resonator, der optisch geschlossen ist, eine Lichtquelle (304) und einen Lichtdetektor (321), wobei der Resonator Folgendes umfasst: zwei konkave Spiegel (301, 302), die gegeneinander ausgerichtet sind, wobei in den optischen Resonator einfallendes Licht alternativ von den konkaven Spiegeln reflektiert wird und die konkaven Spiegel konkave Parabolspiegel (301, 302) einschießen und die Parabeln der konkaven Parabolspiegel über einen gemeinsamen Fokus (301) und eine gemeinsame optische Achse (320) verfügen, wobei die Parabeln der konkaven Parabolspiegel unterschiedliche Brennweite besitzen (305, 306), die Lichtquelle (304) sich an einem Punkt des konkaven Parabolspiegels mit der größere Brennweite befindet, sodass das von der Lichtquelle in Richtung des Fokus (303) ausgestrahlte Licht in der optischen Achse (320) zusammenströmen kann, nachdem das Licht durch den optischen Resonator zirkuliert ist, während es von den konkaven Parabolspiegeln (301, 302) reflektiert wurde, sodass das zirkulierte Licht von dem Lichtdetektor (321) erkannt werden kann, der sich auf der optischen Achse (320) befindet.

2. Die Gaszelle nach Anspruch 1, wobei ein optischer Weg des Lichts abhängig von einem Verhältnis der Brennweite der beiden Parabeln variiert.

3. Die Gaszelle nach Anspruch 1, wobei eine Länge eines optischen Wegs des Lichts in dem optischen Resonator bevor das Licht von dem Lichtdetektor erkannt wird die folgende Gleichung erfüllt:

$$L = 4Np(1-T) = 4N(p+p')$$

wobei N eine Zirkulationszeit des Lichts ist, p und p' Brennweiten der beiden Parabeln sind und T = -p'/p ist.

4. Die Gaszelle nach Anspruch 3, wobei, wenn eine Position der Lichtquelle $A_0 = (\alpha_0, \beta_0)$ ist, eine Position des Punkts auf dem konkaven Spiegel, von dem das Licht reflektiert wird, nachdem das Licht einmal durch den optischen Resonator zirkuliert ist, $A_1 = (\alpha_1, \beta_1)$ ist und eine Position des Lichtdetektors zur Erkennung des Lichts, nachdem das Licht N-mal durch den optischen Resonator zirkuliert ist, $AN = (\alpha_N, \beta_N)$ ist, eine Strahlgröße der Lichts und ein Radius des Schnittsbereichs des Lichtdetektors die folgende Gleichung erfüllen:

$$\beta_0 - \beta_1 > \frac{L_1}{2} + \frac{L_1}{2} \sin\theta \qquad \text{und} \quad \beta_N > \frac{L_2}{2}$$

wobei $L_1$ die Strahlgröße des Lichts, $L_2$ der Radius der Schnittbereich des Lichtdetektors und $\theta$ ein Einfallwinkel der Lichts von der Lichtquelle gegenüber einer normalen Richtung der optischen Achse ist.

5. Die Gaszelle nach Anspruch 4, wobei, wenn das von der Lichtquelle ausgestrahlte Licht zuerst von einer Position $B' = (-\alpha_0 + \varepsilon_1, -\beta_0 + \delta_1)$ reflektiert wird, der Wert $\varepsilon_1$, der einen Verteilungsgrad des von der Lichtquelle ausgestrahlten Lichts darstellt, die folgende Gleichung erfüllt:

$$\varepsilon_1 < \frac{(2p - \alpha_0)(1 + T_2)}{16p^2(T+1)} L_2{}^2 .$$

6. Eine Methode zur Herstellung eines Gassensors, der die folgenden Schritte umfasst: die Ausrichtung zweier gegenüberliegend angeordneter konkaver Spiegel, sodass ein optischer Resonator gebildet wird, der optisch geschlossen ist; die Installation einer Lichtquelle in dem optischen Resonator; und die Installation eines Lichtdetektors in dem optischen Resonator zur Erkennung der Lichteinfalls seitens der Lichtquelle in den optischen Resonator, wobei der optische Resonator durch die Verwendung zweier konkaver Parabolspiegel gebildet wird und Parabeln der konkaven Parabolspiegel über einen gemeinsamen Fokus und eine gemeinsame optische Achse verfügen und wobei die konkaven Parabolspiegel unterschiedliche Brennweiten besitzen und sie sind so ausgerichtet, dass sie über einen gemeinsamen Fokus und eine gemeinsame optische Achse verfügen und die Lichtquelle an einem Punkt des konkaven Parabolspiegels mit der größere Brennweite angeordnet ist, sodass das von der Lichtquelle in Richtung des Fokus ausgestrahlte Licht in der optischen Achse zusammenströmen kann, nachdem das Licht durch den optischen Resonator zirkuliert ist, während es von den konkaven Parabolspiegeln reflektiert wurde und wobei der Lichtdetektor sich auf der optischen Achse befindet.

7. Die Methode nach Anspruch 6, wobei ein optischer Weg des Lichts gesteuert wird, indem ein Verhältnis der Brennweite der beiden Parabeln eingestellt wird.

**8.** Die Methode nach Anspruch 6, die zudem einen Schritt zur Einstellung eines Verhältnisses der Brennweite zwischen den zwei Parabeln umfasst, sodass eine Länge eines optischen Wegs des Lichts in dem optischen Resonator bevor das Licht von dem Lichtdetektor erkannt wird die folgende Gleichung verfüllt.

$$L = 4Np(1\text{-}T) = 4N(p+p')$$

wobei N eine Zirkulationszeit des Lichts ist, p und p' Brennweiten der beiden Parabeln sind und T = -p'/p ist.

**9.** Die Methode nach Anspruch 8, wobei, wenn eine Position der Lichtquelle $A_0 = (\alpha_0,\beta_0)$ ist, eine Position des Punkts auf dem konkaven Spiegel, von dem das Licht reflektiert wird, nachdem das Licht einmal durch den optischen Resonator zirkuliert ist, $A_1 = (\alpha_1,\beta_1)$ ist und eine Position des Lichtdetektors zur Erkennung des Lichts, nachdem das Licht N-mal durch den optischen Resonator zirkuliert ist, $AN = (\alpha_N,\beta_N)$ ist, die Lichtquelle derart in dem optischen Resonator installiert ist, dass eine Strahlgröße der Lichts die folgende Gleichung erfüllt:

$$\beta_0 - \beta_1 > \frac{L_1}{2} + \frac{L_1}{2}\sin\theta$$

wobei $L_1$ die Strahlgröße des Lichts und 8 ein Einfallwinkel des Lichts von der Lichtquelle gegenüber einer normalen Richtung der optischen Achse ist und der Lichtdetektor so in dem optischen Resonator installiert ist, dass ein Radius des Schnittbereichs des Lichtdetektors die folgende Gleichung erfüllt:

$$\beta_N > \frac{L_2}{2}$$

wobei $L_2$ der Schnittbereich des Lichtdetektors ist.

**10.** Die Methode nach Anspruch 9, wobei, wenn das von der Lichtquelle ausgestrahlte Licht zuerst von einer Position B'=$(-\alpha_0+\varepsilon_1,-\beta_0+\delta_1)$ reflektiert wird, die Lichtquelle so in dem optischen Resonator installiert wird, dass der Wert $\varepsilon_1$, der einen Verteilungsgrad des von der Lichtquelle ausgestrahlten Lichts darstellt, die folgende Gleichung erfüllt:

$$\varepsilon_1 < \frac{(2p-\alpha_0)(1+T_2)}{16p^2(T+1)}L_2{}^2 .$$

**Revendications**

**1.** Une pile à gaz comprenant : une cavité optique, qui est optiquement fermée, une source de lumière (304), et un détecteur de lumière (321), la cavité comprenant : deux miroirs concaves (301, 302) alignés en opposition l'un à l'autre, où la lumière incidente dans la cavité optique est alternativement réfléchie depuis les miroirs concaves et les miroirs concaves comprennent des miroirs paraboliques concaves (301,302) et les paraboles des miroirs paraboliques concaves partagent un foyer (303) et un axe optique (320) où les paraboles des miroirs paraboliques concaves ont des longueurs focales différentes l'une de l'autre (305, 306), la source de lumière (304) est située à un point du miroir parabolique concave ayant la plus grande longueur focale de façon à ce que la lumière rayonnée depuis la source de lumière en direction du foyer (303) puisse converger dans l'axe optique (320) après que la lumière a circulé dans la cavité optique en étant réfléchie depuis les miroirs paraboliques concaves (301, 302), pour que la lumière en circulation puisse être détectée par le détecteur de lumière (321) situé sur l'axe optique (320).

**2.** La pile à gaz telle que revendiquée dans la revendication 1, dans laquelle un chemin optique de la lumière varie en fonction d'un rapport des longueurs focales des deux paraboles.

**3.** La pile à gaz telle que revendiquée dans la revendication 1, dans laquelle une longueur d'un chemin optique de la lumière dans la cavité optique avant que la lumière soit détectée par le détecteur de lumière satisfait à l'équation suivante :

$$L = 4Np(1-T) = 4N(p+p')$$

où N est un temps de circulation de la lumière, p et p' sont des longueurs focales des deux paraboles, et T = -p'/p.

4. La pile à gaz telle que revendiquée dans la revendication 3, dans laquelle, lorsqu'une position de la source de lumière est $A_0 = (\alpha_0, \beta_0)$, une position du point sur le miroir concave, depuis lequel la lumière est réfléchie après que la lumière a circulé dans la cavité optique une fois, est $A_1 = (\alpha_1, \beta_1)$ et une position du détecteur de lumière pour détecter la lumière après que la lumière a circulé dans la cavité optique N fois est $A_N = (\alpha_N, \beta_N)$, une grandeur du faisceau de la lumière et un rayon de la section du détecteur de lumière satisfont à l'équation suivante :

$$\beta_0 - \beta_1 > \frac{L_1}{2} + \frac{L_1}{2}\sin\theta \ \text{ et } \ \beta_N > \frac{L_2}{2}$$

où $L_1$ est la grandeur du faisceau de la lumière, $L_2$ est le rayon de la section du détecteur de lumière, et $\theta$ est un angle incident de la lumière depuis la source de lumière par rapport à une direction normale de l'axe optique.

5. La pile à gaz telle que revendiquée dans la revendication 4, dans laquelle, lorsque la lumière rayonnée depuis la source de lumière est d'abord réfléchie depuis une position $B' = (-\alpha_0 + \varepsilon_1, -\beta_0 + \delta_1)$, la valeur de $\varepsilon_1$ représentant un degré de dispersion de la lumière rayonnée depuis la source de lumière satisfait à l'équation suivante :

$$\varepsilon_1 < \frac{(2p - \alpha_0)(1 + T_2)}{16p^2(T + 1)}L_2^{\ 2} .$$

6. Un procédé de fabrication d'un capteur à gaz comprenant les étapes consistant à : aligner deux miroirs concaves en opposition l'un à l'autre, en formant ainsi une cavité optique, qui est optiquement fermée ; installer une source de lumière dans la cavité optique ; et installer un détecteur de lumière dans la cavité optique pour détecter la lumière incidente dans la cavité optique depuis la source de lumière où la cavité optique est formée en utilisant deux miroirs paraboliques concaves et les paraboles des miroirs paraboliques concaves partagent un foyer et un axe optique et où les miroirs paraboliques concaves ont des longueurs focales différentes l'une de l'autre, et sont alignés de façon à ce qu'ils partagent un foyer et un axe optique, et la source de lumière est située à un point du miroir parabolique concave ayant la longueur focale la plus grande de façon à ce que la lumière rayonnée depuis la source de lumière en direction du foyer puisse converger dans l'axe optique après que la lumière a circulé dans la cavité optique en étant réfléchie depuis les miroirs paraboliques concaves, et où le détecteur de lumière est situé sur l'axe optique.

7. Le procédé tel que revendiqué dans la revendication 6, dans lequel un chemin optique de la lumière est contrôlé par le réglage d'un rapport des longueurs focales des deux paraboles.

8. Le procédé tel que revendiqué dans la revendication 6, comprenant en outre une étape de réglage d'un rapport des longueurs focales entre les deux paraboles de façon à ce qu'une longueur d'un chemin optique de la lumière dans la cavité optique avant que la lumière soit détectée par le détecteur de lumière satisfasse à l'équation suivante :

$$L = 4Np(1-T) = 4N(p + p')$$

où N est un temps de circulation de la lumière, p et p' sont des longueurs focales des deux paraboles, et T = -p'/p.

9. Le procédé tel que revendiqué dans la revendication 8, dans lequel, lorsqu'une position de la source de lumière est $A_0 = (\alpha_0, \beta_0)$, une position du point sur le miroir concave, depuis lequel la lumière est réfléchie après que la lumière a circulé dans la cavité optique une fois, est $A_1 = (\alpha_1, \beta_1)$ et une position du détecteur de lumière pour détecter la lumière après que la lumière a circulé dans la cavité optique N fois est , $A_N = (\alpha_N, \beta_N)$, la source de lumière est installée dans la cavité optique de façon à ce qu'une grandeur du faisceau de la lumière satisfasse à l'équation suivante :

$$\beta_0 - \beta_1 > \frac{L_1}{2} + \frac{L_1}{2}\sin\theta$$

où $L_1$ est la grandeur du faisceau de la lumière, et $\theta$ est un angle incident de la lumière depuis la source de lumière par rapport à une direction normale de l'axe optique, et le détecteur de lumière est installé dans la cavité optique de façon à ce qu'un rayon de la section du détecteur de lumière satisfasse à l'équation suivante :

$$\beta_N > \frac{L_2}{2}$$

où $L_2$ est la section du détecteur de lumière.

10. Le procédé tel que revendiqué dans la revendication 9, dans lequel, lorsque la lumière rayonnée depuis la source de lumière est d'abord réfléchie depuis une position B' = $(-\alpha_0 + \varepsilon_1, -\beta_0 + \delta_1)$, la source de lumière est installée dans la cavité optique de façon à ce que la valeur de $\varepsilon_1$ représentant un degré de dispersion de la lumière rayonnée depuis la source de lumière satisfasse à l'équation suivante :

$$\varepsilon_1 < \frac{(2p - \alpha_0)(1 + T_2)}{16p^2(T+1)} L_2^2.$$

Fig. 1

LIGHT SOURCE

$\alpha_0$

$y^2 = 4p'(x'+p')$

$y^2 = -4p(x-p)$

p'

p

LIGHT DETECTOR

LIGHT AXIS

OPTICAL PATH

F=FOCUS

(p,0)

Fig. 2

Fig. 3

$A_0(p-p', 2\sqrt{pp'})$
(304)

(309)

(313)

(317)

(310)

(314)

(318)

(321) (320)

(306)
$(-p',0)$

$(p,0)$

$y^2 = 4p'(x+p')$
(301)

(319)

$O(F)$

(303)

$y^2 = -4p(x-p)$
(302)

(315)

(316)

(311)

(312)

(307)

(308)

$(p'<p)$

Fig. 4

Fig. 5

$tan\Delta'(512)$

$(\alpha_0, \beta_0)$
(503)

(509)

(510)

$D_0$

A

$A_1'$ (504)

$D_0'$

(511)

F

$\overset{2}{y} = 4p(x+p)$
(502)

p     p

$y^2 = -4p(x-p)$
(501)

$B_0$

$C_0$

(505)

$B_0'$

$C_0'$ (507)

(506)

$tan\Delta(511)$

(508)

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 9017745 U1
- DE 10216047
- US 6194735 B1
- WO 2005057188 A